# EUROPÄISCHE PATENTSCHRIFT

(11) **EP 2 757 546 B1**
(45) Veröffentlichungstag und Bekanntmachung des Hinweises auf die Patenterteilung: **29.08.2018**
(21) Anmeldenummer: 14152215.1
(22) Anmeldetag: 22.01.2014
(51) Int. Cl.: G09F 13/18, G02B 6/00, G08B 7/06, G09F 13/04, G09F 13/22

(54) **Hinweistafel, insbesondere für eine Notbeleuchtungsanlage**
Information display panel, in particular for an emergency lighting system
Tableau indicateur, notamment pour une installation d'éclairage de secours

(30) Priorität: 22.01.2013 AT 500432013
(43) Veröffentlichungstag der Anmeldung: 23.07.2014
(73) Patentinhaber: DIN-Dietmar Nocker Facilitymanagement GmbH, 4030 Linz (AT)
(72) Erfinder:
(74) Vertreter: Jell, Friedrich

(56) Entgegenhaltungen:
- DE-A1- 10 113 240
- US-A1- 2012 212 977
- US-A1- 2012 293 716

## Beschreibung

Die Erfindung betrifft eine Hinweistafel, insbesondere für eine Notbeleuchtungsanlage, mit einer Halterung zur Befestigung der Hinweistafel, mit einer hinterleuchteten Anzeige, mit mindestens einem Leuchtmittel, das wenigstens eine lichtemittierende Diode aufweist, und mit einer mit dem Leuchtmittel optisch verbundenen lichtleitenden Platte zur Hinterleuchtung der Anzeige, wobei mindestens die lichtleitende Platte, die Anzeige und das Leuchtmittel eine von der Halterung lösbare Baueinheit ausbilden, und mit lösbaren zwischen Halterung und Baueinheit vorgesehenen mechanischen und elektrischen Verbindungen, wobei mindestens eine an der lichtleitenden Platte angreifende formschlüssige Schnappverbindung eine mechanische Verbindung ausbildet.

Aus dem Stand der Technik ist es bei Hinweistafeln bekannt (FR2739524A1), eine lichtleitende Platte mit Führungselementen einer Linearführung auszustatten, um diese verschiebbar in einer profilförmigen Halterung zu lagern bzw. damit eine lösbare formschlüssige Verbindung zwischen Platte und Halterung auszubilden. Die profilförmige Halterung nimmt dabei außerdem lichtemittierende Dioden auf, die auf die eingeschobene Schmalseite der Platte leuchten bzw. mit der Platte optisch verbunden sind, um damit eine Anzeige der Platte zu hinterleuchten. Nachteilig bedarf es bei der Montage bei der Wartung einer derartigen Hinweistafel eines vergleichsweise hohen Bedienungsaufwands. So ist es beispielsweise für eine Fehlerbehebung an den lichtemittierenden Dioden notwendig, die Hinweistafel zu demontieren und auseinanderzunehmen, um an die im Profil der Halterung verborgenen Dioden heranzukommen. Zudem sind aus der DE20114561U1 und der DE19512370A1 Hinweistafeln bekannt, die eine lichtleitende Platte mit einem Rahmen formschlüssig halten. Im Rahmen sind zudem Leuchtmittle vorgesehen, die mit der lichtleitenden Platte gekoppelt sind. Auch hier ist mit einer aufwendigen Montage bzw. einem hohen Wartungsaufwand zu rechnen.

Eine Hinweistafel gemäß dem Stand der Technik ist aus der WO01/73731A1 bekannt. Diese Hinweistafel weist zwischen Halterung und Baueinheit, die eine lichtleitende Platte, zwei Anzeigen und zwei Leuchtmittel umfasst, eine Schnappverbindung zum mechanischen Zusammenhalt sowie eine elektrische Verbindung zur Energieversorgung der Leuchtmittel auf. Die elektrische Verbindung wird durch ein zusammenwirkendes Anschlusspaar ausgebildet. Nachteilig erfordern solch zusammenwirkende Anschlüsse eine genaue gegenseitige Ausrichtung, was einen vergleichsweise hohen konstruktiven Aufwand in Bezug auf die Führung der mechanischen Verbindungselemente bedarf. Zudem erschwert das Zusammenspiel von mechanischen und elektrischen Verbindungselementen die Montage und Wartung der Hinweistafel. Eine Hinweistafel gemäß dem Oberbegriff des Anspruchs 1 ist aus der US 2012/212977 A1 bekannt.

Die Erfindung hat sich daher die Aufgabe gestellt, eine Hinweistafel der eingangs geschilderten Art derart konstruktiv zu verbessern, dass sich einfache Handhabungsbedingungen sowohl bei der Montage der Hinweistafel, als auch bei deren Wartung ergeben. Zudem soll die Hinweistafel auch besonders kompakt und vergleichsweise kostengünstig herzustellen sein.

Die Erfindung löst die gestellte Aufgabe dadurch, dass für eine elektrische Verbindung ein Schnappelement der Schnappverbindung als elektrischer Leiter zur Energieversorgung und/oder Ansteuerung des Leuchtmittels der Baueinheit ausgebildet ist.

Ist für eine elektrische Verbindung ein Schnappelement der Schnappverbindung als elektrischer Leiter zur Energieversorgung und/oder Ansteuerung des Leuchtmittels der Baueinheit ausgebildet, kann sich zunächst eine konstruktive Einfachheit in Bezug auf den elektrischen Aufbau der Hinweistafel einstellen. So können nämlich selbst in jenem Fall, dass Baueinheit und Halterung voneinander beabstandet angeordnet sind, zusätzliche elektrische Leitungen erübrigen. Mit diesem verringerten Konstruktionsaufwand können weiters Vorteile hinsichtlich des möglichen Designs einer Hinweistafel genutzt werden. Des Weiteren kann mit der erfindungsgemäßen Doppelverwendung der Schnappverbindung - mechanische und elektrische Verbindung - die Handhabung der Hinweistafel bei Montage und Wartung erleichtert werden, weil über die mechanische Führung der Schnappverbindung auch die elektrischen Anschlüsse sicher mitgekuppelt werden können. Ein Lösen bzw. Verbinden der Baueinheit von bzw. mit der Halterung kann daher innerhalb weniger, einfacher Handgriffe durchgeführt werden. Zudem kann es unterbleiben, elektrische und mechanische Verbindungen im Führungsverhalten aufeinander abzustimmen, was höhere Montage- und Fertigungstoleranzen zulassen kann. Damit kann auch die Gefahr von Beschädigungen an der lösbaren Baueinheit, insbesondere an der elektrischen Verbindung, deutlich reduziert werden. Zudem verringert dies den konstruktiven Aufwand an der Hinweistafel und damit deren Kosten.

Im Allgemeinen wird erwähnt, dass es sich bei der erfindungsgemäßen Hinweistafel um beispielsweise eine Sicherheitsbeleuchtung für eine Notbeleuchtungsanlage handeln kann. Als Anzeige kann diese Hinweistafel ein oder mehrere Piktogramme aufweisen, die hinterleuchtet werden. Weiter wird im Allgemeinen erwähnt, dass unter Breitseite einer Platte ihre Front- oder Rückseite erachtet werden kann, die durch Schmalseiten voneinander beabstandet sind. Des Weiteren wird im Allgemeinen erwähnt, dass die Halterung ein, Teile der Schnappverbindung aufnehmendes Montagegehäuse darstellen kann.

Eine vergleichsweise schlanke Baueinheit kann geschaffen werden, wenn das Schnappelement der jeweiligen Schnappverbindung der Baueinheit vorsteht. Da auf diese Weise das mit dem Schnappelement zusammenwirkende andere Verbindungselement an der Halterung vorgesehen werden kann, sind erhöhte konstruktive Freiheiten - insbesondere im Hinblick auf Bautiefen - möglich.

Eine besonders standfeste Verbindung von Baueinheit und Halterung ist geschafft gemäß der Erfindung, worin zwei Schnappverbindungen vorgesehen sind, deren Schnappelemente an einer gemeinsamen Schmalseite der lichtleitenden Platte befestigt sind.

Insbesondere können sich die Endbereiche, vor allem die Ecken, der Schmalseiten zur Befestigung der Schnappelemente anbieten, um eine mechanisch feste Verbindung zwischen Baueinheit und Halterung zu schaffen.

Konstruktiv einfach ist die Schnappverbindung als Steckverbinder ausgeführt. Zur Ausbildung solch eines Steckverbinders kann vorstellbar sein, dass das steckerförmige Schnappelement mit einem buchsenförmigen Außenteil der Schnappverbindung zusammenwirkt, um damit die elektrische Verbindung auszubilden.

Die Sicherheit der mechanischen Verbindung kann erhöht werden, indem die Schnappverbindung ein mit einem Außenteil zusammenwirkendes Schnappelement mit mindestens zwei Schnappwulsten aufweist, wobei ein Schnappwulst, insbesondere der endseitige Schnappwulst, einen größeren Durchmesser als der andere Schnappwulst aufweist. Wird ein Schnappwulst aus der Schnappnut herausgedrängt, kann der andere Schnappwulst somit immer noch ein unerwünschtes Lösen der Baueinheit von der Halterung verhindern.

Ist die Schnappverbindung als Ringschnappverbindung ausgebildet, kann eine gegenüber mechanischen Querbelastungen standfeste Hinweistafel ermöglicht werden. Außerdem kann einer Person durch das Einrasten einer Ringschnappverbindung die korrekte Durchführung der Montage vermittelt werden. Die Funktionssicherheit einer Hinweistafel kann dadurch weiter verbessert werden.

Wirkt in der Befestigungslage von Baueinheit und Halterung der kleinere Schnappwulst mit dem Außenteil zusammen, kann der Schnappwulst mit dem größeren Durchmesser bei einem unerwünschten Lösen der Schnappverbindung den Zusammenhalt zwischen Baueinheit und Halterung trotzdem sicherstellen. Eine verwendungssichere Hinweistafel kann so geschaffen werden.

Wird bei Verlassen der Befestigungslage die von der Schnappverbindung ausgebildete elektrische Verbindung unterbrochen, kann dies optisch signalisiert werden. Die erfindungsgemäße Hinweistafel kann sich daher durch seine besonders einfache Wartungsmöglichkeit auszeichnen.

Geringe Abmessungen der Hinweistafel können erreicht werden, wenn das Leuchtmittel in einer Ausnehmung in der Schmalseite der lichtleitenden Platte vorgesehen ist. Damit kann zudem der rahmenlose Eindruck der Baueinheit verstärkt werden.

Konstruktive Einfachheit kann erreicht werden, wenn das Schnappelement das Leuchtmittel an der lichtleitenden Platte befestigt.

Besonders hohe Anwendungssicherheit kann erreicht werden, wenn ausschließlich bei eingeschnappter Schnappverbindung zwischen der Halterung und der Baueinheit eine elektrische Verbindung über das Schnappelement besteht.

In den Figuren ist beispielsweise eine Hinweistafel anhand eines Ausführungsbeispiels näher dargestellt. Es zeigen
- Fig. 1: eine teilweise auf- und abgerissene Ansicht auf die Breitseitenansicht einer Hinweistafel,
- Fig. 2: eine vergrößerte Schnittansicht nach II-II der Fig. 1,
- Fig. 3: eine vergrößerte Schnittansicht nach Fig. 2 mit teilweise auseinandergezogener Schnappverbindung und
- Fig. 4: eine vergrößerte Ansicht auf das Schnappelement der Figuren 1 bis 3.

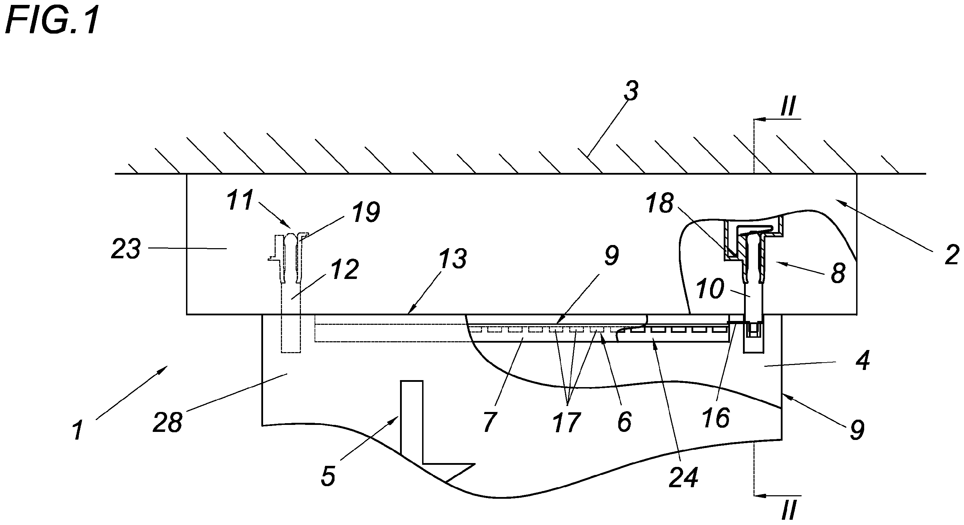

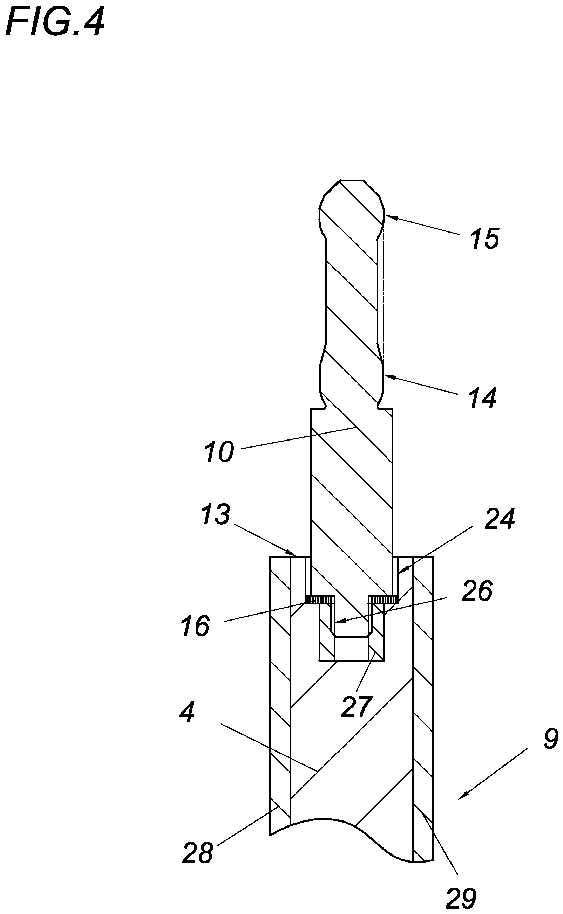

Die nach Fig. 1 beispielsweise dargestellte Hinweistafel 1 für eine nicht näher dargestellte Notbeleuchtungsanlage ist über eine Halterung 2 an einer Wand 3 befestigt, insbesondere indem ihr Montagegehäuse 23 mit der Wand verschraubt ist, was in der Figur 1 nicht näher dargestellt wurde. Es ist aber auch vorstellbar, die Halterung 2 an der Decke zu befestigen. Über die Halterung 2 wird eine lichtleitende Platte 4, die eine Anzeige 5 trägt und diese hinterleuchtet, an der Wand 3 gehalten. Hierfür weist die Hinweistafel 1 Leuchtmittel 6 in Form von mehreren lichtemittierenden Dioden 17 auf. Die Anzeige 5 ist auf einer opaken Platte 28 aufgebracht bzw. ist die opake Platte 28 mit der Anzeige 5 in einer anderen Art und Weise versehen. Wie in Fig. 4 weiter zu entnehmen, ist auf beiden Breitseiten der lichtleitenden Platte 4 je eine opake Platte 28, 29 vorgesehen, um zwei Anzeigen 5 hinterleuchten zu können. Gemäß Fig. 1 sind die mit der lichtleitenden Platte 4 optisch verbundenen Leuchtmittel 6 an einem gemeinsamen, diese Leuchtmittel 6 kühlenden Metallträger 7 befestigt. Die Platte 4 ist von der Halterung 2 lösbar, indem zwischen diesen eine lösbare formschlüssige Verbindung 8, 11 vorgesehen ist. Erfindungsgemäß bilden die Platte 4, die Anzeige 5 und das Leuchtmittel 6 eine zusammen von der Halterung 2 lösbare Baueinheit 9 aus, insbesondere, um die Montage erleichtern und die Leuchtmittel 6 durch Abnehmen der Baueinheit 9 einfach warten zu können. Dieses mögliche Abnehmen der Baueinheit 9 wird konstruktiv gelöst, indem die Baueinheit über mindestens eine an der lichtleitenden Platte 4 angreifende Schnappverbindung 8, 11 mit der Halterung 2 verbunden ist, in dem die Platte 4 einen Verbindungsteil, insbesondere das Schnappelement 10, der Schnappverbindung 8, 11 trägt bzw. an der Platte 4 befestigt ist. Im Ausführungsbeispiel ist diese Schnappverbindung 8, 11 zur mechanischen Verbindung beispielsweise als Ringschnappverbindung ausgebildet.

Wie in Fig. 1 und Fig. 4 zu erkennen, steht das Schnappelement 10 der jeweiligen Schnappverbindung 8 der Baueinheit 9 vor, wodurch ein Einsetzen der Baueinheit 9 in die Halterung 2 vermieden und die lichtleitende Platte in der Größe Ihrer Anzeige nicht beschränkt wird. Das Schnappelement 10 ist über eine Gewindeverbindung 26 mit einer Buchse 27 der lichtleitenden Platte 4 verbunden bzw. greift damit an der lichtleitenden Platte 4 an - siehe Figur 4.

Zwischen der Halterung 2 und der Baueinheit 9 sind zwei Schnappverbindungen 8, 11 vorgesehen, deren Schnappelemente 10, 12 in den Endbereichen auf einer gemeinsamen Schmalseite 13 der Platte 4 befestigt sind.

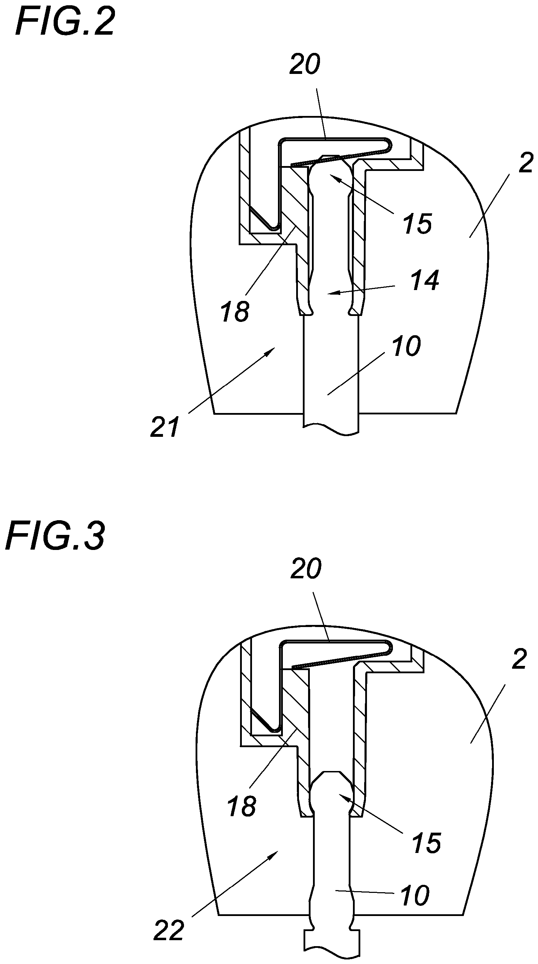

Den Figuren ist weiter zu entnehmen, dass die Schnappelemente 10, 12 als elektrische Leiter zur Energieversorgung und/oder Ansteuerung der Leuchtmittel 6 der Baueinheit 9 ausgebildet und mit der Platine 16 elektrisch verbunden sind. Auf der Platine 16 sind die Leuchtmittel 6 aufgelötet. Wie insbesondere in Fig. 2 erkannt werden kann, sind die Schnappverbindungen 8, 11 zu diesem Zweck als elektrisch leitende Steckverbinder ausgeführt und sorgen so für die Energieversorgung und/oder Ansteuerung der Baueinheit 9. So dient bei der Energieversorgung ein Schnappelement 10 als elektrischer Hinleiter und das andere Schnappelement 12 als elektrischer Rückleiter bzw. vice versa. Außerdem besteht höchste Anwendungssicherheit, weil erst bei eingeschnappter Schnappverbindung 8, 11 zwischen der Halterung 2 und Baueinheit 9 eine elektrische Verbindung über das Schnappelement 10, 12 besteht, wie dies nach den Figuren 2 und 3 zu erkennen ist.

Diese Steckverbinder werden durch elektrisch leitendende, steckerförmige Schnappelemente 10, 12 und buchsenförmigen Außenteilen 18, 19 der Schnappverbindung 8, 11 ausgebildet. Die Schnappelemente 10, 12 und die jeweiligen Außenteile 18, 19 wirken zur Ausbildung der Schnappverbindungen 8, 11 zusammen. Die Außenteile 18, 19 sind jeweils mit einer elektrisch leitenden Feder 20 versehen, die einen elektrischen Kontakt zwischen der Halterung 2 und den Schnappelementen 10, 12 bzw. der Baueinheit 9 herstellen, wie dies der Fig. 2 insbesondere zu entnehmen ist.

Jedes Schnappelement 10, 12 der Ringschnappverbindung weist zwei Schnappwulste 14, 15 auf, um damit eine mechanische Sicherung vor einem unerwünschten Lösen der Baueinheit 9 von der Halterung 2 zu schaffen. Hierfür weist der endseitige Schnappwulst 15 einen größeren Durchmesser als der andere Schnappwulst 14 auf. Auf diese Weise kann der endseitige Schnappwulst 15 vor dem Ausziehen der Schnappelemente 10, 12 aus dem Außenteil 18, 19 der Schnappverbindung 8, 11 noch ein Einrasten sicherstellen und die Gefahr eines unerwünschten Abtrennens die Baueinheit 9 von der Halterung 2 reduzieren. Die Baueinheit 9 kann somit von einer Befestigungslage 21 in eine Sicherungslage 22 übergeführt werden, wie dies im Vergleich der Figuren 2 und 3 zu erkennen ist.

In der Befestigungslage 21 von Baueinheit 9 und Halterung 2 wirkt also der kleine Schnappwulst 14 mit dem jeweiligen Außenteil 18, 19 zusammen. Wird nun die Befestigungslage 21 - beabsichtigt oder nicht - verlassen, kann dies durch eine Unterbrechung der Hinterleuchtung der Anzeige 4 sofort ersichtlich werden - da bei Verlassens der Befestigungslage 21 die elektrische Verbindung, ausgebildet von der Schnappverbindung 8, 11, unterbrochen wird. In diesem Fall besteht - wie in Fig. 3 zu erkennen - zwischen Feder 20 und Schnappelement 10, 12 nämlich kein Kontakt und damit keine elektrische Verbindung mehr.

Wie den Figuren 1 und 4 zudem entnommen werden kann, ist das Leuchtmittel 6 bzw. dessen am Metallträger 7 befestigten Dioden 17 in eine Ausnehmung 24 in der Schmalseite 13 der lichtleitenden Platte 4 vorgesehen. Eine kompakte Baueinheit 9 ist damit geschaffen. Das Schnappelement 10, 12 befestigt das Leuchtmittel 6 an der lichtleitenden Platte 4, indem die Platine 16 zwischen das Schnappelement 10, 12 und die lichtleitende Platte 4 geklemmt wird.

## Patentansprüche

1. Hinweistafel, insbesondere für eine Notbeleuchtungsanlage, mit einer Halterung (2) zur Befestigung der Hinweistafel (1), mit einer hinterleuchteten Anzeige (5), mit mindestens einem Leuchtmittel (6), das wenigstens eine lichtemittierende Diode (17) aufweist, und mit einer mit dem Leuchtmittel (6) optisch verbundenen lichtleitenden Platte (4) zur Hinterleuchtung der Anzeige (5), wobei mindestens die lichtleitende Platte (4), die Anzeige (5) und das Leuchtmittel (6) eine von der Halterung (2) lösbare Baueinheit (9) ausbilden, und mit lösbaren zwischen Halterung (2) und Baueinheit (9) vorgesehenen mechanischen und elektrischen Verbindungen, wobei mindestens eine an der lichtleitenden Platte (4) angreifende formschlüssige Schnappverbindung (8, 11) eine mechanische Verbindung ausbildet, wobei für eine elektrische Verbindung ein Schnappelement (10, 12) der Schnappverbindung (8, 11) als elektrischer Leiter zur Energieversorgung und/oder Ansteuerung des Leuchtmittels (6) der Baueinheit (9) ausgebildet ist, wobei die Schnappverbindung (8, 11) als Steckverbinder ausgeführt ist, **dadurch gekennzeichnet, dass** zwei Schnappverbindungen (8, 11) vorgesehen sind, deren Schnappelemente (10, 12) auf einer gemeinsamen Schmalseite (13) der lichtleitenden Platte (4) befestigt sind.

2. Hinweistafel nach Anspruch 1, **dadurch gekennzeichnet, dass** das Schnappelement (10, 12) der jeweiligen Schnappverbindung (8, 11) der Baueinheit (9) vorsteht.

3. Hinweistafel nach Anspruch 1 oder 2, **dadurch gekennzeichnet, dass** die Schnappelemente (10, 12) in den Endbereichen der Schmalseite (13) befestigt sind.

4. Hinweistafel nach einem der Ansprüche 1 bis 3, **dadurch gekennzeichnet, dass** das steckerförmige Schnappelement (10, 12) mit einem buchsenförmigen Außenteil (18, 19) der Schnappverbindung (8, 11) zusammenwirkt.

5. Hinweistafel nach einem der Ansprüche 1 bis 4, **dadurch gekennzeichnet, dass** die Schnappverbindung (8, 11) ein mit einem Außenteil (18, 19) zusammenwirkendes Schnappelement (10, 12) mit mindestens zwei Schnappwulsten (14, 15) aufweist, wobei ein Schnappwulst (14, 15), insbesondere der endseitige Schnappwulst (15), einen größeren Durchmesser als der andere Schnappwulst (14) aufweist.

6. Hinweistafel nach Anspruch 5, **dadurch gekennzeichnet, dass** die Schnappverbindung (8, 11) als Ringschnappverbindung ausgebildet ist.

7. Hinweistafel nach Anspruch 5 oder 6, **dadurch gekennzeichnet, dass** in der Befestigungslage (21) von Baueinheit (9) und Halterung (2) der kleinere Schnappwulst (14) mit dem Außenteil (18, 19) zusammenwirkt.

8. Hinweistafel nach Anspruch 5, 6 oder 7, **dadurch gekennzeichnet, dass** bei Verlassen der Befestigungslage (21) die von der Schnappverbindung (8, 11) ausgebildete elektrische Verbindung unterbrochen ist.

9. Hinweistafel nach einem der Ansprüche 1 bis 8, **dadurch gekennzeichnet, dass** das Leuchtmittel (6) in einer Ausnehmung (24) in der Schmalseite (13) der lichtleitenden Platte (4) vorgesehen ist.

10. Hinweistafel nach einem der Ansprüche 1 bis 9, **dadurch gekennzeichnet, dass** das Schnappelement (10, 12) das Leuchtmittel (6) an der lichtleitenden Platte (4) befestigt.

11. Hinweistafel nach einem der Ansprüche 1 bis 10, **dadurch gekennzeichnet, dass** ausschließlich bei eingeschnappter Schnappverbindung (8, 11) zwischen der Halterung (2) und der Baueinheit (9) eine elektrische Verbindung über das Schnappelement (10, 12) besteht.

12. Hinweistafel nach einem der Ansprüche 1 bis 11, **dadurch gekennzeichnet**, das für die Energieversorgung des Leuchtmittels (6) der Baueinheit (9) ein Schnappelement (10) als elektrischer Hinleiter und das andere Schnappelement (12) als elektrischer Rückleiter dient.

## Claims

1. Information display panel, more particularly for an emergency lighting system, comprising a holder (2) for fastening the information display panel (1), a backlit display (5), at least one lighting means (6) having at least one light-emitting diode (17), and a light-conductive plate (4) optically connected to the lighting means (6) for backlighting the display (5), wherein at least the light-conductive plate (4), the display (5) and the lighting means (6) form an assembly (9) which is detachable from the holder (2), and comprising releasable mechanical and electrical connections provided between the holder (2) and assembly (9), wherein at least one interlocking snap connection (8, 11) engaging on the light-conductive plate (4) forms a mechanical connection, wherein for an electrical connection a snap element (10, 12) of the snap connection (8, 11) is formed as an electrical conductor for the power supply and/or triggering of the lighting means (6) of the assembly (9), wherein the snap connection (8, 11) is designed as a plug connector, **characterized in that** two snap connections (8, 11) are provided, the snap elements (10, 12) of which are attached to a common narrow side (13) of the light-conductive plate (4).

2. Information display panel according to claim 1, **characterized in that** the snap element (10, 12) of the respective snap connection (8, 11) protrudes from the assembly (9).

3. Information display panel according to claim 1 or 2, **characterized in that** the snap elements (10, 12) are attached in the end regions of the narrow side (13).

4. Information display panel according to one of the claims 1 to 3, **characterized in that** the plug-shaped snap element (10, 12) cooperates with a bush-shaped outer part (18, 19) of the snap connection (8, 11).

5. Information display panel according to one of the claims 1 to 4, **characterized in that** the snap connection (8, 11) comprises a snap element (10, 12) cooperating with an outer part (18, 19) and having at least two snap beads (14, 15), wherein one snap bead (14, 15), more particularly the end-side snap bead (15), has a larger diameter than the other snap bead (14).

6. Information display panel according to claim 5, **characterized in that** the snap connection (8, 11) is designed as a ring snap connection.

7. Information display panel according to claim 5 or 6, **characterized in that** the smaller snap bead (14) cooperates with the outer part (18, 19) in the fixing position (21) of the assembly (9) and holder (2).

8. Information display panel according to claim 5, 6 or 7, **characterized in that** when leaving the fixing position (21) the electrical connection formed by the snap connection (8, 11) is interrupted.

9. Information display panel according to one of the claims 1 to 8, **characterized in that** the lighting means (6) is provided in a recess (24) in the narrow side (13) of the light-conductive plate (4).

10. Information display panel according to one of the claims 1 to 9, **characterized in that** the snap element (10, 12) fastens the lighting means (6) to the light-conductive plate (4).

11. Information display panel according to one of the claims 1 to 10, **characterized in that** an electrical connection via the snap element (10, 12) exists only with engaged snap connection (8, 11) between the holder (2) and the assembly (9).

12. Information display panel according to one of the claims 1 to 11, **characterized in that** for the energy supply of the lighting means (6) of the assembly (9) a snap element (10) serves as an electrical forward conductor and the other snap element (12) as an electrical return conductor.

## Revendications

1. Panneau de signalisation, en particulier pour une installation d'éclairage de secours, avec une monture (2) pour la fixation du panneau de signalisation (1), avec un affichage rétroéclairé (5), avec au moins une lampe (6) comportant au moins une diode électroluminescente (17) et avec une plaque conduisant la lumière (4) en liaison optique avec une ou la lampe (6) pour le rétroéclairage de l'affichage (5), la plaque conduisant la lumière (4), l'affichage (5) et la lampe (6), au minimum, formant une unité de construction (9) qui peut être détachée de la monture (2), et avec des liaisons mécaniques et électriques pouvant être défaites prévues entre la monture (2) et l'unité de construction (9), la liaison mécanique étant formée par au moins un assemblage enclenché (8, 11) en correspondance de forme qui se met en prise sur la plaque conduisant la lumière (4), un élément d'enclenchement (11, 12) de l'assemblage enclenché (8, 11) étant conformé, en vue d'une liaison électrique, comme un conducteur électrique pour l'alimentation en énergie et/ou la commande de la lampe (6) de l'unité de construction (9), l'assemblage enclenché (8, 11) étant réalisé comme un connecteur enfiché, **caractérisé en ce que** deux assemblages enclenchés (8, 11) sont prévus, dont les éléments d'enclenchement (10, 12) sont fixés sur un petit côté (13) commun de la plaque conduisant la lumière (4).

2. Panneau de signalisation selon la revendication 1, **caractérisé en ce que** l'élément d'enclenchement (10, 12) de chaque assemblage enclenché (8, 11) dépasse de l'unité de construction (9).

3. Panneau de signalisation selon la revendication 1 ou 2, **caractérisé en ce que** les éléments d'enclenchement (10, 12) sont fixés dans les parties d'extrémité du petit côté (13).

4. Panneau de signalisation selon l'une des revendications 1 à 3, **caractérisé en ce que** l'élément d'enclenchement (10, 12) de forme mâle coopère avec une partie extérieure (18, 19) de l'assemblage enclenché (8, 11) de forme femelle.

5. Panneau de signalisation selon l'une des revendications 1 à 4, **caractérisé en ce que** l'assemblage enclenché (8, 11) présente un élément d'enclenchement (10, 12) coopérant avec une partie extérieure (18, 19) et munie d'au moins deux bourrelets d'enclenchement (14, 15), un bourrelet d'enclenchement (14, 15), en particulier le bourrelet d'enclenchement d'extrémité (15), ayant un plus grand diamètre que l'autre bourrelet d'enclenchement (14).

6. Panneau de signalisation selon la revendication 5, **caractérisé en ce que** l'assemblage enclenché (8, 11) est réalisé comme un assemblage enclenché annulaire.

7. Panneau de signalisation selon la revendication 5 ou 6, **caractérisé en ce que** dans la position de fixation (21) de l'unité de construction (9) et de la monture (2), le plus petit bourrelet d'enclenchement (14) coopère avec la partie extérieure (18, 19).

8. Panneau de signalisation selon la revendication 5, 6 ou 7, **caractérisé en ce que** lorsque la position de fixation (21) est quittée, la liaison électrique formée par l'assemblage enclenché (8, 11) est interrompue.

9. Panneau de signalisation selon l'une des revendications 1 à 8, **caractérisé en ce que** la lampe (6) est prévue dans un creux (24) dans le petit côté (13) de la plaque conduisant la lumière (4).

10. Panneau de signalisation selon l'une des revendications 1 à 9, **caractérisé en ce que** l'élément d'enclenchement (10, 12) fixe la lampe (6) sur la plaque conduisant la lumière (4).

11. Panneau de signalisation selon l'une des revendications 1 à 10, **caractérisé en ce qu'**une liaison électrique par l'élément d'enclenchement (10, 12) est établie exclusivement quand l'assemblage enclenché (8, 11) est enclenché entre la monture (2) et l'unité de construction (9)

12. Panneau de signalisation selon l'une des revendications 1 à 11, **caractérisé en ce qu'**en vue de l'alimentation électrique de la lampe (6) de l'unité de construction (9), un élément d'enclenchement (10) sert de conducteur électrique d'aller et l'autre élément d'enclenchement (12) de conducteur électrique de retour.
